# EUROPEAN PATENT APPLICATION

(11) **EP 4 053 002 A1**
(43) Date of publication of application: **07.09.2022**
(21) Application number: 21890575.0
(22) Date of filing: 12.05.2021
(51) Int. Cl.: B62D 57/032, G05D 1/08

(54) **BIONIC MACHINE FOOT DEVICE, BIONIC MACHINE AND CONTROL METHOD THEREOF**

(30) Priority: 12.11.2020 CN 202011262079
(71) Applicant: Tencent Technology (Shenzhen) Company Limited, Shenzhen City, Guangdong 518057 (CN)
(72) Inventor: XIONG, Kun, Shenzhen, Guangdong 518057 (CN); DAI, Yuan, Shenzhen, Guangdong 518057 (CN); ZHANG, Dongsheng, Shenzhen, Guangdong 518057 (CN); CHEN, Xiangyu, Shenzhen, Guangdong 518057 (CN); YANG, Sicheng, Shenzhen, Guangdong 518057 (CN); ZHANG, Zhengyou, Shenzhen, Guangdong 518057 (CN)
(74) Representative: Gunzelmann, Rainer
(86) International application number: PCT/CN2021/093416
(87) International publication number: WO 2022/100042

(57) **Abstract**

This application, relating to the field of bionic machine technologies, provides a foot device of a bionic machine and a bionic machine, which are used to reduce design costs and processing complexity. The foot device includes a foot body, a pressure sensor, and a distance sensor; the pressure sensor is connected to the foot body, and is configured to detect a pressure between a bottom end surface and the ground; the distance sensor is located on the bottom end surface of the foot body, is connected to the foot body, and is configured to detect a distance between the bottom end surface and the ground. When the bionic machine moves, the distance sensor transmits a distance detection signal indicating a distance between a sole component and the ground to a control device of the bionic machine, and the pressure sensor transmits a pressure detection signal indicating a contact pressure between the sole component and the ground to the control device.

## Description

### RELATED APPLICATION

This application claims priority to Chinese Patent Application No. 202011262079.7,

### FIELD OF THE TECHNOLOGY

This application relates to the field of bionic machine technologies, and in particular, to a foot device of a bionic machine and a bionic machine and a control method therefor.

### BACKGROUND OF THE DISCLOSURE

With the development of science and technology, bionic machines, such as mechanical dogs, are developed, which have broad development prospects in fields of military, logistics and distribution, and security.

Taking a mechanical dog as an example, the mechanical dog, when used, needs to have good balance, flexibility, and mobility, and can run and move autonomously for a long time. Therefore, it is necessary to accurately control a foothold of a foot of the mechanical dog.

### SUMMARY

Embodiments of this application provide a foot device of a bionic machine and a bionic machine and a control method therefor, which are used to reduce design costs and processing complexity.

In an aspect, a foot device of a bionic machine is provided, including a foot body, a pressure sensor, and a distance sensor; the pressure sensor is connected to the foot body, configured to detect a pressure between a bottom end surface of the foot body and the ground; the distance sensor is located on the bottom end surface, and being connected to the foot body, configured to detect a distance between the bottom end surface and the ground.

In an aspect, a bionic machine is provided, including a leg device, a control device, and the foregoing foot device, the foot device being connected to the leg device.

In an aspect, a control method for a bionic machine is provided, the bionic machine being the bionic machine described in the previous aspect, the method including:
detecting the distance between the bottom end surface and the ground and the pressure between the bottom end surface and the ground; and
determining a position of a foothold of the foot device of the bionic machine based on the distance between the bottom end surface and the ground and rotation angles of joint motors of the leg device of the bionic machine in a case that the pressure between the bottom end surface and the ground is zero.

In an embodiment of this application, a foot device of a bionic machine includes a foot body, a pressure sensor, and a distance sensor. When the bionic machine moves, the distance sensor can detect a distance between a bottom end surface of the foot body and the ground, and the pressure sensor can detect a pressure between the bottom end surface of the foot body and the ground. In this way, a control device of the bionic machine can precisely control a foothold of the foot device of the bionic machine based on the distance between the bottom end surface of the foot body and the ground and the pressure between the bottom end surface of the foot body and the ground. The pressure sensor and the distance sensor are combined with other parts of the bionic machine, so that a foothold of the bionic machine can be precisely controlled, few sensors are used, costs are low, and circuitry is simple.

### BRIEF DESCRIPTION OF THE DRAWINGS

To describe the technical solutions in the embodiments of this application or in the related art more clearly, the following briefly describes the accompanying drawings required for describing the embodiments or the related art. Apparently, the accompanying drawings in the following description show merely embodiments of this application. A person of ordinary skill in the art may still derive other drawings according to provided accompanying drawings without creative efforts.
FIG. 1 is a schematic structural diagram of a foot device of a bionic machine according to an embodiment of this application.
FIG. 2 is a schematic cross-sectional diagram of a foot device according to an embodiment of this application.
FIG. 3 is a schematic structural diagram of a support component according to an embodiment of this application.
FIG. 4 is a schematic right top view of a foot device according to an embodiment of this application.
FIG. 5 is a schematic right bottom view of a foot device according to an embodiment of this application.
FIG. 6 is a schematic structural diagram of a bionic machine according to an embodiment of this application.

### DESCRIPTION OF EMBODIMENTS

To make the objectives, technical solutions, and advantages of this application clearer, the following clearly and completely describes the technical solutions in the embodiments of this application with reference to the accompanying drawings in the embodiments of this application. Apparently, the described embodiments are merely some rather than all of the embodiments of this application. Based on the embodiments of this application, all other embodiments obtained by a person of ordinary skill in the art without creative efforts shall fall within the protection scope of this invention. The embodiments in this application and features in the embodiments may be combined with each other in the case of no conflict.

First, some terms in this application are explained.
(1) A bionic machine is a machine designed and transformed by studying and discussing biological mechanisms and imitating shapes, structures or functions of living things. It can be considered that the bionic machine has the same precise conditions as moving organs of living things, and has an excellent intelligent system that can perform ingenious control and perform complex actions. Atypical bionic machine is, for example, a mechanical dog. The mechanical dog has appearance features similar to those of an animal dog, and can simulate the animal dog to perform certain actions and assist in realizing certain functions. The mechanical dog has broad development prospects in fields of military, logistics and distribution, and security. For example, the mechanical dog can play an important role on the battlefield, such as delivering ammunition, food, and other items to soldiers.
(2) A pressure sensor is a device or an apparatus that can sense a pressure signal and convert the pressure signal into a usable output signal according to certain rules.
(3) A distance sensor, also referred to as a displacement sensor, is a type of sensors, and is used to sense a distance between itself and an object, to complete a preset function.
(4) A spring gasket can be used to be disposed under a nut, to prevent the nut from loosening and enhance a pretightening force function. Considering a characteristic of the spring gasket to adjust a force, the spring gasket is used to set the pressure sensor to zero. Materials of the spring gasket include stainless steel and carbon steel. Of course, an appropriate material can be selected according to needs.

The solutions provided by the embodiments of this application mainly relate to technologies at a hardware level of artificial intelligence, and in particular, to bionic machine technologies. The bionic machine technology is an edge technology that is based on mechanics or mechanology and integrates biology, medicine, and engineering. It not only applies engineering technologies to medicine and biology, but also applies medicine and biology to the engineering technologies. It includes mechanical study on biological phenomena, engineering analysis on biological movements and actions, and practical application of these results according to social requirements.

The bionic machine technology involves various aspects. A robotic engineering technology is a typical example of applying biological knowledge to the engineering field, whose purpose is to help and replace human operations in abnormal environments such as space, ocean, atomic energy production, and disaster sites. Robots need to have artificial hands and feet with mobile functions and artificial intelligence with sensory feedback functions. Artificial hands, walking machines, and sound recognition of three-dimensional objects are currently hot research topics.

The solutions provided by the embodiments of this application mainly relate to walking machine technologies in the field of bionic machine technologies, and are used to assist in controlling movement of bionic machines. Since the existing design of feet of a bionic machine often uses force sensors combined with inertial measurement unit (IMU) sensors to control footholds of the feet of the bionic machine, this design is expensive and is complicated in data circuit processing. In addition, due to the large size and weight of the feet of the bionic machine, the weight of legs of the bionic machine increases, which is not conducive to precise control over the footholds of the feet of the bionic machine.

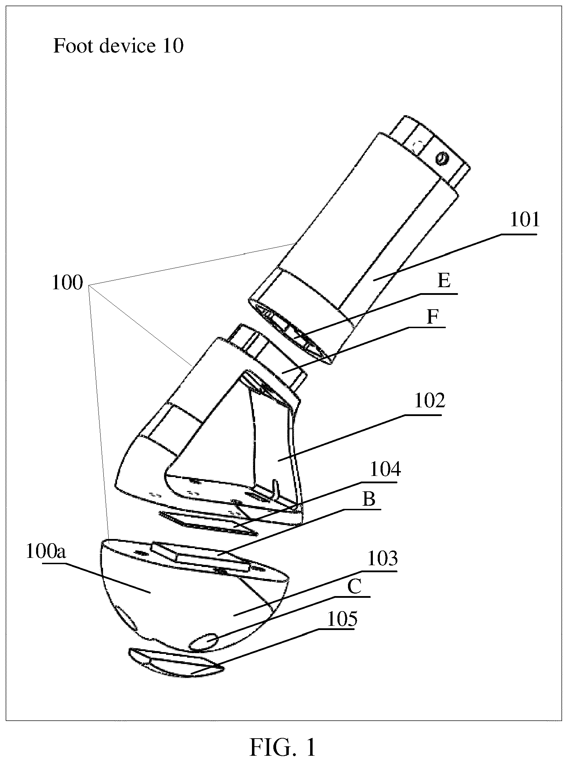

Based on the above problems, an embodiment of this application provides a foot device of a bionic machine. FIG. 1 is a schematic structural diagram of a foot device of a bionic machine according to an embodiment of this application. As shown in FIG. 1, the foot device 10 includes a foot body 100, a pressure sensor 104, and a distance sensor 105. The pressure sensor 104 is connected to the foot body 100. The pressure sensor 104 is configured to detect a pressure between a bottom end surface 100a of the foot body 100 and the ground. The distance sensor 105 is located on the bottom end surface 100a, is connected to the foot body 100. The distance sensor 105 is configured to detect a distance between the bottom end surface 100a and the ground.

The top of the foot body 100 is used to connect to a leg device of the bionic machine, and the bottom end surface 100a of the foot body 100 is an end surface used by the foot device 10 to be in contact with the ground when the bionic machine is walking.

During movement of the bionic machine, the distance sensor can detect a distance between a bottom end surface of the foot body and the ground, and the pressure sensor can detect a pressure between the bottom end surface of the foot body and the ground. The distance sensor transmits a distance detection signal indicating the distance between the bottom end surface of the foot body and the ground to a control device of the bionic machine, and the pressure sensor transmits a pressure detection signal indicating a pressure between a sole component and the ground to the control device of the bionic machine, so that the control device precisely controls a foothold of the foot device of the bionic machine according to the pressure detection signal and the distance detection signal. In addition, according to existing IMU design solutions, the IMU is expensive and contains a plurality of sensors, causing complicated data circuit processing controlled according to the IMU. In an embodiment of this application, the pressure sensor and the distance sensor are combined with other parts of the bionic machine, so that a foothold of the bionic machine can be precisely controlled, and costs are low; and data circuit processing is further simplified because fewer sensors are used.

Taking a mechanical dog as an example, when the mechanical dog moves, a distance sensor installed on a sole of the mechanical dog detects a distance between the sole of the mechanical dog and the ground in real time, and transmits a distance detection signal indicating the distance to a controller of the mechanical dog. When the sole of the mechanical dog is in contact with the ground, a pressure sensor installed on the foot of the mechanical dog detects a pressure on the foot, and transmits a pressure detection signal indicating the pressure to the controller of the mechanical dog. The controller calculates a foothold of the foot of the mechanical dog according to the received distance detection signal and pressure detection signal, as well as a rotation angle of each joint motor of a leg of the mechanical dog, and then controls the foot of the mechanical dog according to the calculated foothold.

In addition, as shown in FIG. 1, in an embodiment of this application, a partial area of the foot body 100 of the foot device 10 is configured into a hollowed-out structure or a hollow structure, which can effectively reduce the weight of the foot device and use fewer materials, thereby further reducing costs of the foot device.

After a design idea of the embodiments of this application is described, the following briefly describes application scenarios to which the technical solutions in this embodiment of this application are applicable. The application scenarios described below are merely used for describing rather than limiting the embodiments of this application. During specific implementation, the technical solutions provided in the embodiments of this application can be flexibly applied according to an actual requirement.

In a specific application, a bionic machine is, for example, a robot, a mechanical dog, a mechanical cat, or any other mechanical device that imitates biological features. As an example, the foot device of the bionic machine provided in the embodiments of this application can be applied to scenarios such as security mechanical dogs, military mechanical dogs, and intelligent robots.

For example, the foot device of the bionic machine is applied to the security mechanical dog. The foot device of the bionic machine may be installed on a foot of the mechanical dog. When the foot device is close to the ground or away from the ground, the foot device sends a measured pressure measurement signal and distance measurement signal to a control device of the bionic machine. For example, if the security mechanical dog includes a leg for walking, the foot device for being in contact with the ground is disposed on a lower end of the leg, and then during inspection process of the security mechanical dog, the control device of the mechanical dog controls a foothold of a foot according to the pressure measurement signal and the distance measurement signal measured by the foot device.

As shown in FIG. 1, the distance sensor 105 may be located in the center of the bottom end surface 100a, so that a distance between the bottom end surface 100a and the ground detected by the distance sensor 105 is more accurate, and a distance between a sole of the bionic machine and the ground can be measured more accurately.

For example, the distance sensor 105 and the pressure sensor 104 are both patch sensors, and can alternatively be any other distance sensor and pressure sensor suitable for the embodiments of this application.

As shown in FIG. 1, the bottom end surface 100a of the foot body 100 may be a convex surface. When the bionic machine walks, the foot device, when being in contact with the ground, usually rotates around a contact position between the bottom end surface 100a and the ground, and the bottom end surface 100a is set to a convex surface. When the foot device rotates, the contact position between the bottom end surface 100a and the ground gradually changes, so that the foot device rotates around the contact position between the bottom end surface 100a and the ground more easily, and can be better in contact with the ground when walking on an uneven ground, enabling the bionic machine to walk more smoothly.

For example, the bottom end surface 100a of the foot body 100 is a spherical convex surface or a spheroidal convex surface.

Optionally, the pressure sensor 104 is located on the bottom end surface 100a of the foot body 100. The pressure sensor 104 is disposed on the bottom end surface 100a of the foot body 100. During walking of the bionic machine, when the bottom end surface 100a of the foot body 100 is in contact with the ground, the pressure sensor 104 is pressed, thereby detecting a pressure between the bottom end surface 100a of the foot body 100 and the ground during contact.

There are one or more pressure sensors 104. When there are a plurality of pressure sensors 104, the plurality of pressure sensors 104 are distributed around the distance sensor 105. The pressure sensors 104 are disposed on the bottom end surface 100a, and are disposed around the distance sensor 105. Because the sole component 103 is a convex surface, the plurality of pressure sensors 104 can easily measure pressures in different areas of the bottom end surface 100a, so as to obtain an average pressure between the bottom end surface 100a and the ground during contact. The average pressure is a pressure value of the foot device when being in contact with the ground.

In some examples, the foot body 100 is in a split structure, including a plurality of parts that can be split. As shown in FIG. 1, the foot body 100 of the foot device includes a connection component 101, a support component 102, and a sole component 103. An end of the support component 102 is connected to the sole component 103, and another end of the support component 102 is connected to the connection component 101. The connection component 101 is used to connect to the leg of the bionic machine, and the sole component 103 is used to come into contact with the ground.

The foot body 100 with the split structure, the connection component 101, the support component 102, and the sole component 103 are produced and formed separately, and different components can be produced by different processes.

As shown in FIG. 1, an angle between an end surface of the support component 102 near the sole component 103 and an axis of the connection component 101 is an acute angle. The axis of the connection component 101 extends along a length direction of the connection component 101. When the bionic machine stands, the foot device is usually not perpendicular to the ground, but forms a certain angle to the ground, enabling the bionic machine to stand more stably.

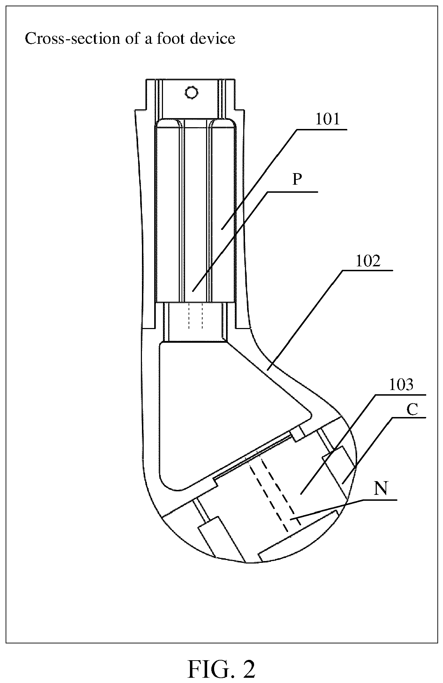

FIG. 2 is a schematic cross-sectional diagram of a foot device according to an embodiment of this application. In order to facilitate disposing signal lines and prevent the signal lines from being easily damaged, the connection component 101 is designed into the structure of a hollow rod. The connection component 101 is designed with a receiving cavity P inside, and the receiving cavity P is arranged along an axial direction of the connection component 101. A signal line of the pressure sensor 104 and a signal line of the distance sensor 105 are located in the connection component 101, so as to pass through the receiving cavity P of the connection component 101 to connect to the control device of the bionic machine.

The signal line of the distance sensor 105 enters the support component 102 through a signal line hole N of the sole component 103, and then enters the receiving cavity P of the connection component 101 together with the signal line of the pressure sensor 104 through a signal line hole in the support component 102. In this way, the signal lines can be prevented from being exposed outside the foot device, so that the signal lines are not easily damaged and the service life is prolonged. Meanwhile, the designing the connection component 101 into the structure of a hollow rod is further beneficial to reduction of the overall weight of the foot device of the bionic machine, so as to be more suitable for a lightweight bionic machine.

Optionally, the connection component 101 is made of a metal material, for example, steel, aluminum, or magnesium-aluminum alloy. Of course, another possible material, for example, plastic, can alternatively be used. Moreover, in a case that the connection component 101 is made of the metal material, the designing the connection component 101 into the structure of a hollow rod can greatly reduce the weight of the foot device of the bionic machine, improve precise control over a foot, and further enhance flexibility of the bionic machine during movement.

In an embodiment of this application, in order to further reduce the weight of the foot of the bionic machine, so that the foot of the lightweight bionic machine can be flexibly controlled, the support component 102 in the foot device of the bionic machine can be further designed into a hollowed-out structure or a hollow structure. A hollowed-out shape is any shape, and is designed according to an actual need, for example, it is designed into the hollowed-out structure similar to a trapezoid as shown in FIG. 1. A cavity inside the hollow structure can also be in any shape, and can be designed according to an actual need, for example, a hollow structure with a spherical shape inside.

Optionally, the support component 102 can be made of a metal material, for example, steel, aluminum, or magnesium-aluminum alloy. Of course, another possible material, for example, plastic, can alternatively be used. Moreover, in a case that the support component 102 is made of the metal material, the designing the support component into a hollowed-out structure can greatly reduce the weight of the foot device of the bionic machine, improve precise control over a foot, and further enhance flexibility of the bionic machine during movement.

As shown in FIG. 2, the sole component 103 is in a hemispherical structure or a semi-spheroidal structure, to provide a spherical or spheroidal bottom end surface 100a. During the walking process of the bionic machine, if the ground is uneven, the spherical or spheroidal bottom end surface 100a can be in better contact with the ground, so that the bionic machine keeps stable.

Optionally, on an end surface of the support component 102 near the sole component 103, an orthogonal projection of the spherical center of the sole component 103 coincides with the center of the end surface of the support component 102 near the sole component 103, so that the foot device is more stable when the bionic machine stands.

Optionally, the sole component 103 is made of a rubber material. The rubber material can deform when subjected to a force, and absorb impact generated when the foot device is in contact with the ground.

In order to protect the distance sensor 105 located on the bottom end surface 100a, in an embodiment of this application, a layer of rubber is wrapped around the distance sensor 105, so that the distance sensor 105 is not in direct contact with the ground, so as to prevent the distance sensor 105 from damage caused by friction between the foot device and the ground when the bionic machine moves, and prevent the distance sensor 105 from damage caused when the foot device steps into water.

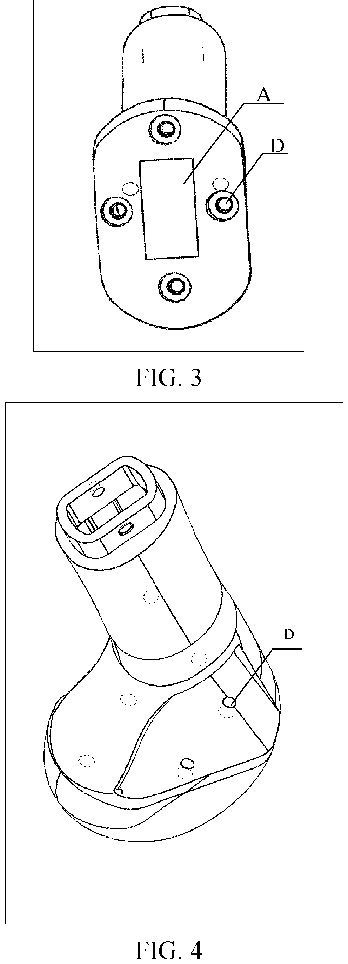

Optionally, one of an end surface of an end of the support component 102 and an end surface of an end of the sole component 103 has a first groove A, the other has a first protrusion B, and the first protrusion B is located in the first groove A. For example, FIG. 3 is a schematic structural diagram of a support component according to an embodiment of this application. As shown in FIG. 3, an end surface of an end of the support component 102 has a first groove A.

As shown in FIG. 1 and FIG. 3, the first groove A is arranged on the end of the support component 102 connected to the sole component 103, and the first protrusion B matching the first groove A is correspondingly arranged on the end of the sole component 103 connected to the support component 102. When the support component 102 and the sole component 103 are connected, the first protrusion B is snapped into the first groove A, which plays a positioning role, so that the support component 102 and the sole component 103 can be better connected.

Optionally, the pressure sensor 104 is located in the first groove A. The pressure sensor 104 may be directly disposed on the bottom end surface 100a, or be disposed in the first groove A. When the bottom end surface 100a is in contact with the ground, the support component 102 and the sole component 103 are pressed against each other, and the pressure sensor 104 is pressed, so that a pressure between the bottom end surface 100a and the ground can be indirectly detected. Compared with disposing the pressure sensor 104 on the bottom end surface 100a, disposing the pressure sensor 104 in the first groove A reduces a possibility that the pressure sensor 104 is submerged by stagnant water when the foot device steps into the stagnant water.

In addition, when there is water in the foot device accidentally, since the first groove A is located on the support component 102 and the support component 102 is located above the sole component 103, the water does not stay in the first groove A due to gravity, thereby reducing damage caused by the water to the pressure sensor 104.

In another example, the first groove A is arranged on the end of the sole component 103 connected to the support component 102, and the first protrusion B matching the first groove is correspondingly disposed on the end of the support component 102 connected to the sole component 103, which can also play the positioning role, so that the support component 102 and the sole component 103 can be better connected.

The shape and size of the first groove A are set according to the pressure sensor 104. As shown in FIG. 1, the pressure sensor 104 is in a cuboid shape, so the first groove A is also set in a rectangular shape in order to place the pressure sensor 104, and correspondingly, the first protrusion B is also set in a cuboid shape.

In an embodiment of this application, the sole component 103 and the support component 102 may be connected in various ways, including detachable connection or non-detachable connection. A detachable connection manner includes connection by using detachable connectors such as screws, or snap-fit connection, and the non-detachable connection includes glue connection, welding connection, or the like.

In a possible implementation, the sole component 103 and the support component 102 may be connected by a detachable connector.

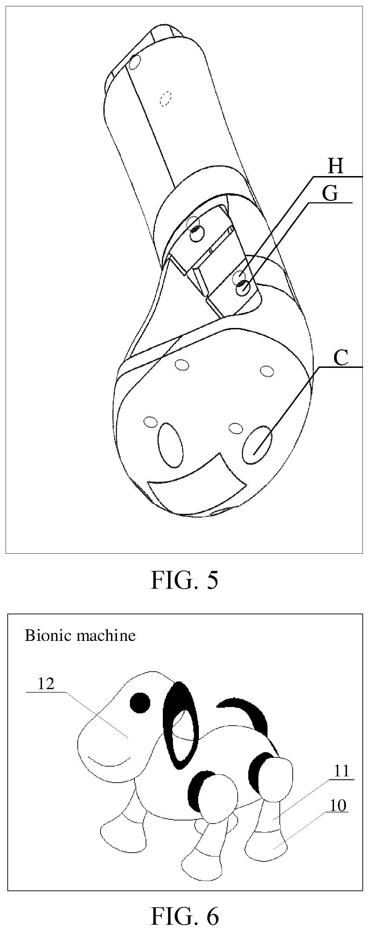

As shown in FIG. 4 and FIG. 5, an end surface of the sole component 103 near the support component 102 has a plurality of first holes C, an end surface of the support component 102 near the sole component 103 has a plurality of second holes D, and the first hole C corresponds to the second hole D. The first hole C and the corresponding second hole D are connected by a first connector.

The first connector passes through the first hole C and the second hole D for fixed connection, so as to fixedly connect the sole component 103 and the support component 102.

Optionally, the first hole C of the sole component 103 and the second hole D of the support component 102 are threaded holes, stepped holes, or the like. The stepped hole is a large-diameter through-hole coaxially drilled based on a small-diameter through-hole, is in a step shape when viewed from the side, and may be used for professional part welding and fixing. The first connector is a bolt, a screw, a stud, a pin, or the like that matches the first hole C and the second hole D. For example, in an embodiment of this application, both the first hole C and the second hole D are threaded holes, and the first connector is a screw matching the threaded holes.

As shown in FIG. 3, a plurality of second holes D are distributed around the first groove A. In an embodiment of this application, four first holes C evenly distributed around the first protrusion B are arranged on the sole component 103, and correspondingly, four second holes D evenly distributed around the first grooves A are arranged on the support component 102. When the sole component 103 is connected to the support component 102, a plurality of first connectors are distributed around the first protrusion B and the first groove A, so that connection between the sole component 103 and the support component 102 is more stable. In an embodiment of this application, a quantity of the first holes C, a quantity of the second holes D, and a quantity of the first connectors are all merely examples, which are not limited in the embodiments of this application.

In an embodiment of this application, a direction of a center line of the first hole C is perpendicular to a top surface of the first protrusion B. There are a plurality of second holes D that are correspondingly arranged on the end of the support component 102 connected to the sole component 103, the second holes D are distributed around the first groove A, and a direction of a center line of the second hole D is perpendicular to a bottom surface of the first groove A.

Pressure sensing components of the pressure sensor 104 are made of elastic materials, and the materials may be affected by factors such as temperature, humidity, and even creep of the materials to slightly deform, leading to a non-zero output when there is no external force. After the pressure sensor 104 is installed, in a case that the foot device does not touch the ground, if the pressure sensor 104 outputs a pressure value, the pressure sensor 104 needs to be set to zero. In order to facilitate setting the pressure sensor 104 to zero, in an embodiment of this application, the foot body 100 further includes a spring gasket, the spring gasket being located between opposite end surfaces of the support component 102 and the sole component 103, and being sleeved outside the first connector. The spring gasket is disposed between the support component 102 and the sole component 103. A gap size between the opposite end surfaces of the support component 102 and the sole component 103 is adjusted by adjusting the first connector, thereby adjusting a deformation degree of the spring gasket to set the pressure sensor 104 to zero. For example, if the first connector is a bolt, the gap size between the opposite end surfaces of the support component 102 and the sole component 103 can be adjusted by adjusting an amount of screwing of the bolt and a mating nut, and the deformation degree of the spring gasket changes according to the gap size, thereby setting the pressure sensor 104 to zero.

When the foot device is not in contact with the ground, the pressure sensor 104 has measured a pressure value, a reason for which may be that the sole component 103 and the support component 102 are connected too tightly, so that the pressure sensor 104 is pressed to display a pressure value. In this case, in order to reduce the pressure on the pressure sensor 104, the deformation degree of the spring gasket between the support component 102 and the sole component 103 can be reduced, so that connection between the sole component 103 and the support component 102 becomes a little looser. On the contrary, when the foot device is in contact with the ground, the pressure sensor 104 has not measured a pressure value, a reason for which may be that the sole component 103 and the support component 102 are connected too loosely, so that the pressure sensor 104 is not pressed and cannot display a pressure value. In this case, in order to increase the pressure on the pressure sensor 104, the deformation degree of the spring gasket between the support component 102 and the sole component 103 can be increased, so that the connection between the sole component 103 and the support component 102 becomes a little tighter, and then the pressure sensor 104 can be pressed, so as to set the pressure sensor to zero.

Optionally, a connection structure between the support component 102 and the connection component 101 is similar to a connection structure between the support component 102 and the sole component 103. One of an end surface of an end of the support component 102 away from the sole component 103 and an end surface of an end of the connection component 101 has a second groove E, the other has a second protrusion F, and the second protrusion F is located in the second groove E.

As shown in FIG. 1, the second groove E is arranged on the end of the connection component 101 connected to the support component 102, and the second protrusion F matching the second groove E is correspondingly disposed on the end of the support component 102 connected to the connection component 101. When the support component 102 and the connection component 101 are connected, the second protrusion F is snapped into the second groove E, which plays a positioning role, so that the support component 102 and the connection component 101 can be better connected.

Optionally, the pressure sensor 104 is located in the second groove E. The pressure sensor 104 may be directly disposed on the bottom end surface 100a, may be disposed in the first groove A, or can be disposed in the second groove E. When the bottom end surface 100a is in contact with the ground, the support component 102 and the connection component 101 are pressed against each other, and the pressure sensor 104 is pressed, so that a pressure between the bottom end surface 100a and the ground can be indirectly detected. Compared with disposing the pressure sensor 104 on the bottom end surface 100a, disposing the pressure sensor 104 in the second groove E can also reduce a possibility that the pressure sensor 104 is submerged by stagnant water.

In addition, when there is water in the foot device accidentally, since the second groove E is located on the connection component 101 and the connection component 101 is located above the support component 102, the water does not stay in the second groove E due to gravity, thereby reducing damage caused by the water to the pressure sensor 104.

In another example, the second groove E is arranged on the end of the support component 102 connected to the connection component 101, and the second protrusion F matching the second groove E is correspondingly disposed on the end of the connection component 101 connected to the support component 102, which can also play the positioning role, so that the support component 102 and the connection component 101 can be better connected.

The shape and size of the second groove E match the size and shape of the second protrusion F. As shown in FIG. 1, the second protrusion F is set in a rounded rectangular shape, and a corresponding second groove E is set to a rounded rectangular groove.

In an embodiment of this application, the connection component 101 and the support component 102 may be connected in various ways, including detachable connection or non-detachable connection. A detachable connection manner includes connection by using detachable connectors such as screws, or snap-fit connection, and the non-detachable connection includes glue connection, welding connection, or the like.

In a possible implementation, the connection component 101 and the support component 102 may be connected by a detachable connector. Referring to FIG. 5, an end surface of the support component 102 near the connection component 101 has a plurality of third holes G, an end surface of the connection component 101 near the support component 102 has a plurality of fourth holes H, the third hole G corresponds to the fourth hole H, and the third hole G and the corresponding fourth hole H are connected by using a second connector. As an example, in an embodiment of this application, two third holes G are arranged, and two fourth holes H are also arranged.

The second connector passes through the third hole G and the fourth hole H for fixed connection, so as to fixedly connect the connection component 101 and the support component 102.

Optionally, the third hole G and the fourth hole H are threaded holes, stepped holes, or the like. The second connector is a bolt, a screw, a stud, a pin, or the like that matches the third hole G and the fourth hole H. For example, in an embodiment of this application, both the third hole G and the fourth hole H are threaded holes, and the second connector is a screw matching the threaded holes.

A plurality of fourth holes H are distributed around the second groove E. Two third holes G evenly distributed around the second protrusion F are arranged on the support component 102, and correspondingly, two fourth holes H evenly distributed around the second groove E are arranged on the connection component 101. When the connection component 101 is connected to the support component 102, a plurality of second connectors are distributed around the second protrusion F and the second groove E, so that connection between the connection component 101 and the support component 102 is more stable. In an embodiment of this application, a quantity of the third holes G, a quantity of the fourth holes H, and a quantity of the second connectors are all merely examples, which are not limited in the embodiments of this application.

In an embodiment of this application, a direction of a center line of the third hole G is perpendicular to a top surface of the second protrusion F. The plurality of fourth holes H are correspondingly arranged on an end of the connection component 101 connected to the support component 102, and the fourth hole H is perpendicular to a bottom surface of the second groove E.

Similar to that the pressure sensor 104 is located in the first groove A, when the pressure sensor 104 is located in the second groove E, a spring gasket can also be disposed between the support component 102 and the connection component 101, and the spring gasket is sleeved outside the second connector. A gap size between the opposite end surfaces of the support component 102 and the connection component 101 is adjusted by adjusting the second connector, thereby adjusting a deformation degree of the spring gasket to set the pressure sensor 104 to zero. For example, if the second connector is a bolt, the gap size between the opposite end surfaces of the support component 102 and the connection component 101 can be adjusted by adjusting an amount of screwing of the bolt and a mating nut, and the deformation degree of the spring gasket changes according to the gap size, thereby setting the pressure sensor 104 to zero.

The spring gasket may be annular. When the pressure sensor 104 is located in the first groove A, a spring gasket is sleeved outside each first connector, and deformation of all spring gaskets can be adjusted separately by adjusting different first connectors. When the pressure sensor 104 is located in the second groove E, a spring gasket is sleeved outside each second connector, and the deformation of all spring gaskets can be adjusted separately by adjusting different second connectors.

In some examples, the foot body 100 is in a one-piece structure, that is, the connection component 101, the support component 102, and the sole component 103 are integrated. The foot body 100 of the one-piece structure has high structural strength, and may be manufactured by a set of molds. For the foot body 100 of the one-piece structure, the pressure sensor 104 and the distance sensor 105 are both located on the bottom end surface 100a of the foot body 100.

Based on a same inventive concept, an embodiment of this application further provides a bionic machine. FIG. 6 is a schematic structural diagram of a bionic machine according to an embodiment of this application, the bionic machine 12 including a leg device 11, a control device (located inside the bionic machine and not shown), and the foregoing foot device 10, the foot device 10 being connected to the leg device 11. Generally, the bionic machine includes a plurality of leg devices 11, and each leg device 11 is correspondingly connected to a foot device 10.

Based on a same inventive concept, an embodiment of this application further provides a control method for the bionic machine, including:
detecting a distance between the bottom end surface 100a and the ground and a pressure between the bottom end surface 100a and the ground; and
determining a position of a foothold of the foot device 10 of the bionic machine based on the distance between the bottom end surface 100a and the ground and rotation angles of joint motors of the leg device 11 of the bionic machine in a case that the pressure between the bottom end surface 100a and the ground is zero.

The bionic machine can perform corresponding actions according to the pressure measured by the pressure sensor and the distance measured by the distance sensor. For example, when a mechanical dog moves, a foot of the mechanical dog is in a process of approaching the ground. Since the foot is not in contact with the ground, the pressure sensor has not detected a pressure value in this case, that is, the pressure value is zero. The foot of the mechanical dog is constantly approaching the ground, so that the distance sensor detects a distance between a sole of the foot and the ground in real time, then generates a distance detection signal indicating the distance, and transmits the distance detection signal to a control device of the mechanical dog. Then the control device calculates a position of a foothold of the foot of the mechanical dog according to the received distance detection signal and rotation angles of joint motors of a leg of the mechanical dog, and controls the foothold of the mechanical dog according to the calculated result.

Although the embodiments of this application have been described, once persons skilled in the art know a basic creative concept, they can make other changes and modifications to these embodiments. Therefore, the following claims are intended to be construed as to cover the exemplary embodiments and all changes and modifications falling within the scope of this application.

Obviously, a person skilled in the art may make various modifications and variations to this application without departing from the spirit and scope of this application. In this case, if the modifications and variations made to this application fall within the scope of the claims of this application and their equivalent technologies, this application is intended to include these modifications and variations.

## Claims

1. A foot device of a bionic machine, comprising a foot body (100), a pressure sensor (104), and a distance sensor (105);
the pressure sensor (104) being connected to the foot body (100), and being configured to detect a pressure between a bottom end surface (100a) of the foot body (100) and ground;
the distance sensor (105) being located on the bottom end surface (100a), being connected to the foot body (100), and being configured to detect a distance between the bottom end surface (100a) and the ground.

2. The foot device according to claim 1, wherein the pressure sensor (104) is located on the bottom end surface (100a).

3. The foot device according to claim 2, wherein the bottom end surface (100a) is a convex surface, there are a plurality of pressure sensors (104), and the plurality of pressure sensors (104) are distributed around the distance sensor (105).

4. The foot device according to any one of claims 1 to 3, wherein the distance sensor (105) is located in the center of the bottom end surface (100a).

5. The foot device according to any one of claims 1 to 4, wherein the foot body (100) comprises a connection component (101), a support component (102), and a sole component (103), an end of the support component (102) being connected to the sole component (103), another end of the support component (102) being connected to the connection component (101).

6. The foot device according to claim 5, wherein one of an end surface of the end of the support component (102) and an end surface of an end of the sole component (103) has a first groove (A), the other has a first protrusion (B), and the first protrusion (B) is located in the first groove (A);
one of an end surface of the another end of the support component (102) and an end surface of an end of the connection component (101) has a second groove (E), the other has a second protrusion (F), and the second protrusion (F) is located in the second groove (E).

7. The foot device according to claim 6, wherein the pressure sensor (104) is located in at least one of the following:
the first groove (A); or
the second groove (E).

8. The foot device according to claim 6 or 7, wherein the end surface of the sole component (103) near the support component (102) has a plurality of first holes (C), the end surface of the support component (102) near the sole component (103) has a plurality of second holes (D), the first hole (C) corresponds to the second hole (D), and the first hole (C) and the corresponding second hole (D) are connected by using a first connector;
the end surface of the support component (102) near the connection component (101) has a plurality of third holes (G), the end surface of the connection component (101) near the support component (102) has a plurality of fourth holes (H), the third hole (G) corresponds to the fourth hole (H), and the third hole (G) and the corresponding fourth hole (H) are connected by using a second connector.

9. The foot device according to claim 8, wherein the plurality of second holes (D) are distributed around the first groove (A); the plurality of fourth holes (H) are distributed around the second groove (E).

10. The foot device according to any one of claims 5 to 9, wherein the foot body (100) further comprises a spring gasket, the spring gasket being located:
between opposite end surfaces of the support component (102) and the sole component (103); and/or
between opposite end surfaces of the support component (102) and the connection component (101);

11. The foot device according to any one of claims 5 to 10, wherein the connection component (101) is a hollow rod, a signal line of the pressure sensor (104) and a signal line of the distance sensor (105) being located in the connection component (101).

12. The foot device according to any one of claims 5 to 11, wherein the support component (102) is in a hollowed-out structure or a hollow structure.

13. The foot device according to any one of claims 5 to 12, wherein the sole component (103) is in a hemispherical structure or a semi-spheroidal structure.

14. The foot device according to claim 13, wherein on the end surface of the support component (102) near the sole component (103), an orthogonal projection of the spherical center of the sole component (103) coincides with the center of the end surface of the support component (102) near the sole component (103).

15. The foot device according to any one of claims 5 to 14, wherein an angle between the end surface of the support component (102) near the sole component (103) and an axis of the connection component (101) is an acute angle.

16. A bionic machine, comprising a leg device and a control device, and further comprising a plurality of foot devices according to any one of claims 1 to 15, the foot device (10) being connected to the leg device (11).

17. A control method for a bionic machine, the bionic machine being the bionic machine according to claim 16, the method comprising:
detecting a distance between a bottom end surface (100a) and the ground and a pressure between the bottom end surface (100a) and the ground; and
determining a position of a foothold of the foot device (10) of the bionic machine based on the distance between the bottom end surface (100a) and the ground and rotation angles of joint motors of the leg device (11) of the bionic machine in a case that the pressure between the bottom end surface (100a) and the ground is zero.
